# EUROPÄISCHE PATENTSCHRIFT

(11) **EP 0 689 656 B1**
(45) Veröffentlichungstag und Bekanntmachung des Hinweises auf die Patenterteilung: **28.07.1999**
(21) Anmeldenummer: 94926765.2
(22) Anmeldetag: 27.09.1994
(51) Int. Cl.: F23J 13/02, F24D 12/02

(54) **KONDENSATIONSKAMIN**
CONDENSATION CHIMNEY
CHEMINEE DE CONDENSATION

(30) Priorität: 04.11.1993 CH 331893
(43) Veröffentlichungstag der Anmeldung: 03.01.1996
(73) Patentinhaber: Wunsch, Horst, CH-8597 Landschlacht (CH)
(72) Erfinder: Wunsch, Horst, CH-8597 Landschlacht (CH)
(74) Vertreter: Schwabe, Hans-Georg, Dipl.-Ing.
(86) Internationale Anmeldenummer: CH9400191
(87) Internationale Veröffentlichungsnummer: WO9512784

(56) Entgegenhaltungen:
- EP-A- 0 036 364
- DE-A- 3 427 036
- DE-A- 4 111 179
- DE-A- 4 312 094
- FR-A- 2 552 858
- FR-A- 2 666 871
- GB-A- 2 116 299
- NL-A- 7 902 575
- US-A- 4 560 349

## Beschreibung

Die Erfindung betrifft einen Kondensationskamin gemäss dem Oberbegriff den Patentanspruchs 1.

Gebäude werden meistens durch Verbrennung von Kohlenwasserstoffen wie Erdöl, Erdgas oder Kohle geheizt. Das dabei entstehende Kohlendioxid ist mitverantwortlich für den Treibhauseffekt. Das Zurückhalten des Kohlendioxids würde aber einen derart grossen Energieaufwand erfordern, dass es sich von der Energiebilanz her nicht mehr lohnte, die Kohlenwasserstoffe zu verbrennen. Um die Luftverschmutzung möglichst niedrig zu halten und unsere Ressourcen an fossilen Brennstoffen zu schonen, ist es wichtig, den Verbrauch an Brennmaterial zu reduzieren.
Da die Kohlenwasserstoffe aus lebender Substanz entstanden, enthalten sie eine grosse Menge an Kohlenstoff und in geringeren Mengen eine Vielzahl weiterer Stoffe, wie zum Beispiel Schwefel und Stickstoff.
Diese Stoffe gelangen bei der Verbrennung von Kohlenwasserstoffen in das Verbrennungsgas. Das Verbrennungsgas enthält neben Wasserdampf, Kohlendioxid, Russ, Schwefeloxiden und Stickstoffoxiden auch Salzsäure, welche aus den chlorierten Kohlenwasserstoffen entsteht, die sich in der Verbrennungsluft befinden. Die Stickstoffoxide entstehen grösstenteils aus Stickstoff, welcher ebenfalls aus der Verbrennungsluft stammt. Im Gegensatz zum Kohlendioxid und zu den Stickoxiden können Wasserdampf, Russ, Schwefeloxide und Salzsäure mit geeigneten Mitteln zumindest teilweise zurückgehalten werden.
Der herkömmlichen Heiztechnik des heissen Kamins liegt das Ziel zugrunde, die Verbrennungsgase so vollständig wie möglich in die Atmosphäre zu leiten. Wenn die Temperaturen im Kamin unter den Taupunkt fallen, dann beginnt das Verbrennungsgas zu kondensieren. Herkömmliche Kamine sind entweder aus Ziegelsteinen gemauert oder bestehen aus Keramikkacheln oder Edelstahl. Diese Materialien sind nicht genügend korrosionsfest und versotten, wenn sie über längere Zeit dem sauren Kondensat mit pH-Werten von 1,5 - 3,7 ausgesetzt sind.
Um eine Versottung zu verhindern, musste die Rauchgastemperatur bei Kaminen aus herkömmlichen Werkstoffen so hoch sein, dass es im Kamin zu keiner Kondensation kam. Die Schadstoffe gelangten bei dieser Technik vollständig in die Atmosphäre und kondensierten erst dort. Eine hohe Schadstoffbelastung der Luft und saurer Regen waren die Folge. Das in die Atmosphäre geleitete Verbrennungsgas enthielt neben den Schadstoffen eine beachtliche Energiemenge, die ungenutzt verloren ging.
Die Praxis hat nun gezeigt, dass Glas oder hochwertige Kunststoffe wie PVDF (Polyvinylidenfluorid) die einzigen Werkstoffe sind, welche der Einwirkung des Kondensats standzuhalten vermögen. Ein Alternative zur umweltbelastenden Technik des heissen Kamins ist die Technik des kalten, nassen, kondensierenden Kamins. Kaminrohre aus den korrosionsfesten Werkstoffen Glas und dem Kunststoff PVDF ermöglichten es erst, diese umweltschonende Technik in die Praxis umzusetzen. Bei dieser Technik wird ein grosser Teil der Energie, welche im Wasserdampf und im Gasvolumen von Heizungsrauchgas gebunden ist, zurückgewonnen. Im weiteren kann ein grosser Teil der im Rauchgas enthaltenen, umweltrelevanten Stoffe wie Wasserdampf, Schwefelsäure, Salzsäure, unverbrannte Kohlenwasserstoffe und Russ im Kaminrohr zurückgehalten werden. Das Prinzip dieser Technik liegt in der Absenkung der Heizkesseltemperatur. Genauer gesagt beträgt bei der Brennwert-Technik die Temperatur des Abgases beim Austritt aus dem Heizkessel etwa 30-40°C, bei der Niedertemperatur-Technik etwa 90-140°C. Eine weitere Abkühlung des Rauchgases findet im Kaminrohr statt, welches bei dieser Technik nicht wärmeisoliert ist. Durch die Abkühlung gelangt ein Teil des Rauchgases zur Kondensation. Im Kamin entsteht ein stark säurehaltiges Kondensat, welches den Kaminwänden entlang nach unten fliesst und am Fusse des Kaminrohrs in einen Neutralisationsbehälter abgeführt wird.
Die Patentschrift DE 3421 112 A1 (Veröffentlichungsdatum 11. 10.1984) hat als Gegenstand der Erfindung einen Kamin, welcher für die Anwendung der Technik des kalten, nassen, kondensierenden Kamins vorgesehen ist.

Der in dieser Patentschrift beschriebene Kamin zeichnet sich durch die folgenden Merkmale aus:
Die Konstruktionselemente des Kamins sind nicht wärmegedämmt, wodurch den Abgasen Wärme entzogen wird, welche durch die Konstruktionselemente zur Aussenseite des Kamins hin abgeführt wird, wobei an der Innenwand ein wesentlicher Teil der umweltschädlichen Bestandteile des Abgases (z.B. als Rauchgaskondensat) ausfällt und entlang der Innenwand abgeführt wird.
Beim Einsatz im häuslichen Bereich wird in Kaminen des herkömmlichen Aufbaus ein Innenrohr eingesetzt. Das Innenrohr ist vorzugsweise aus mehreren Stücken zusammengesetzt, welche mit trichterförmigen, zentrierenden Muffen derart verbunden sind, dass die Rohrverbindungen hinsichtlich der üblichen Flussrichtung des Kondensats dicht sind. Der Raum ausserhalb dieses Innenrohrs und innerhalb des üblichen Kaminzuges wird mit einem Material mit hoher Wärmeleitfähigkeit, vorzugsweise mit einer Sandschüttung, ausgefüllt. Dieses Material hat die Aufgabe, die Wärme vom Innenrohr zur äusseren Kaminwandung zu leiten. Es ist ausserdem vorgesehen, in der Kaminwandung Öffnungen zum Innenraum des Gebäudes anzubringen, und diese Öffnungen gegebenenfalls mit einem festen, wärmestrahlenden Material zu verschliessen. Eine weitere vorgesehene Möglichkeit besteht darin, zwischen der Aussenwand des Innenrohres und der Kaminwandung des herkömmlichen Kamins einen Hohlraum zu belassen. Dieser Hohlraum ist gegen das Gebäudeinnere hin geöffnet, so dass die Luft des Hohlraumes mit der Luft im Inneren des Gebäudes kommunizieren kann.
Der in der erwähnten Patentschrift beschriebene Kamin hat den Nachteil, dass die Kontaktfläche für das Rauchgas lediglich durch die glatte Innenwand des inneren Kaminrohrs gebildet wird. Durch die Vergrösserung dieser Kontaktfläche könnte der Anteil des Rauchgases, welcher im Kamin zur Kondensation gebracht werden kann, wesentlich erhöht werden.
Im weiteren hat dieser Kamin den Nachteil, dass die Wärme lediglich durch Wärmediffusion oder durch passive Konvektion vom Innenrohr zu der äusseren Kaminumwandung gelangt. Der Wärmeaustausch ist entsprechend langsam.

Das Kondensat wird am Fusse des Kaminrohrs in einen Neutralisationsbehälter geleitet. Dieser Neutralisationsbehälter enthält üblicherweise, neben einem Aktivkohlefilter, ein Neutralisationsgranulat, welches die Säuren des Kondensats neutralisiert. Bislang wurde in Hauskaminen als Neutralisationsgranulat reines, chemisch hergestelltes Kalziumkarbonat verwendet, was nicht sehr umweltfreundlich ist. Natürlicher Kalk wird bislang nur in Grossfeuerungsanlagen wie Müllverbrennungen verwendet.

Die Patentschrift EP-0 036 364 A1, auf der der Oberbegriff des Patentanspruch 1 beruht, betrifft ein Verfahren zur Verbindung eines Gasbrenners mit einem herkömmlichen Kamin. Hierzu wird ein dünnes, flexibles Rohr aus rostfreiem Stahl in den Kamin eingesetzt und über eine Überwurfdichtung mit dem Auslaß des Gasbrenners verbunden. Frische Außenluft strömt durch den Zwischenraum zwischen Kaminwandung und Stahlrohr, kühlt dort das Stahlrohr ab und wird als erwärmte Luft unmittelbar in eine Gasmischkammer innerhalb des Heizkessels eingeleitet. Wasserkondensat, das sich an der Stahlrohrwand niederschlägt, rinnt das Stahlrohr herab und gelangt über die Überwurfdichtung in ein Abführrohr für Kondensat, das innerhalb des Heizkessels angeordnet ist. Da diese Heizung nicht über einen Puffer für angesaugte Warmluft verfügt sondern die Warmluft vielmehr direkt in den Gasbrenner eingeleitet wird, führen Temperaturschwankungen der angesaugten Warmluft zu einer ungleichmäßigen Verbrennung.

Der Gegenstand der Patentschrift GB 2 116 299 A betrifft ein Heizungssystem, bei dem Wärme, die normalerweise durch Heizungsabgase an die Umgebung verloren geht, zurückgewonnen werden soll. Hierzu wird entweder Raumluft oder Wasser an einem Wärmetauscher vorbeigeführt, der durch die Abgase der Heizungsanlage erwärmt wird, um seinerseits die Raumluft bzw. das Wasser aufzuwärmen. Bei einem Ausführungsbeispiel wird Luft aus einem Obergeschoss durch einen Zwischenraum zwischen Kamininnenrohr und Kaminaußenwandung geleitet, erwärmt und in das Erdgeschoss weitergeleitet. In diesem Erdgeschoss befindet sich auch der Heizungskessel.

Die Erfindung stellt sich nun die Aufgabe, einen für die Technik des kalten, kondensierenden Kamins geeigneten Kamin zu schaffen, welcher eine grössere Kontaktfläche zu Rauchgas aufweist als die bislang bekannten Kamine und welcher über eine Vorrichtung verfügen soll, welche die Wärme aktiv und ohne größere Temperaturschwankungen aus dem Raum zwischen dem Innenrohr des Kamins und der Kaminwandung abführt. Zudem soll das bislang zur Neutralisation eingesetzte reine, chemisch hergestellte Kalziumkarbonat durch ein umweltschonenderes Material ersetzt werden. Der Kamin soll schliesslich noch eine Vorrichtung zur Bindung der im Kondensat vorkommenden Schwermetalle aufweisen.

Die Aufgabe wird erfindungsgemäss mit Hilfe der Ausbildungsmerkmale nach dem kennzeichnenden Teil des Patentanspruches 1 gelöst.
Vorteilhafte Weiterbildungen der Erfindung sind Gegenstand der abhängigen Ansprüche.

Der vorgeschlagene Kamin verfügt vorzugsweise über eine gemauerte Kaminwandung und ein Innenrohr aus korrosionsfestem Kunststoff. Er wird mit der oben beschriebenen Technik des kalten, nassen, kondensierenden Kamins betrieben. Das anfallende Kondensat wird entlang der Kaminwände nach unten abgeleitet und am Fusse des Innenrohres über einen Siphon und einen Schlauch in einen Neutralisationsbehälter geleitet. Anstelle des Siphons kann aber auch eine Ionentauscher-Harz-Patrone verwendet werden, welche eventuell im Kondensat vorhandene, aus dem Heizkessel stammende Schwermetalle bindet. Beim vorgeschlagenen Kamin wird die Kontaktfläche zum Rauchgas vergrössert, indem als Innenrohr ein Profilrohr oder ein Rohr mit einem spiralgerollten Bandprofil verwendet wird und zusätzlich Füllkörper in den Innenraum dieses Innenrohrs eingebaut werden. Die Verwendung von Füllkörpern in Kaminen wurde vom Anmelder des vorliegenden Patentes bereits in einer früheren Patentschrift beschrieben.
Die Wärme, welche das Innenrohr an seiner Aussenseite abstrahlt, wird aktiv abgeführt, indem ein Ventilator, welcher am Fusse des Kamins angeordnet ist, die aufgewärmte Luft zwischen dem Innenrohr und der äusseren Kaminwandung absaugt und in den Heizraum zurückführt.
Im weiteren wird beim vorgeschlagenen Kamin das bisher zur Neutralisation verwendete reine, chemisch hergestellte Kalziumkarbonat durch Marmor ersetzt.
Die Erfindung ist unter anderem in den Zeichnungen erläutert.
Es zeigen:

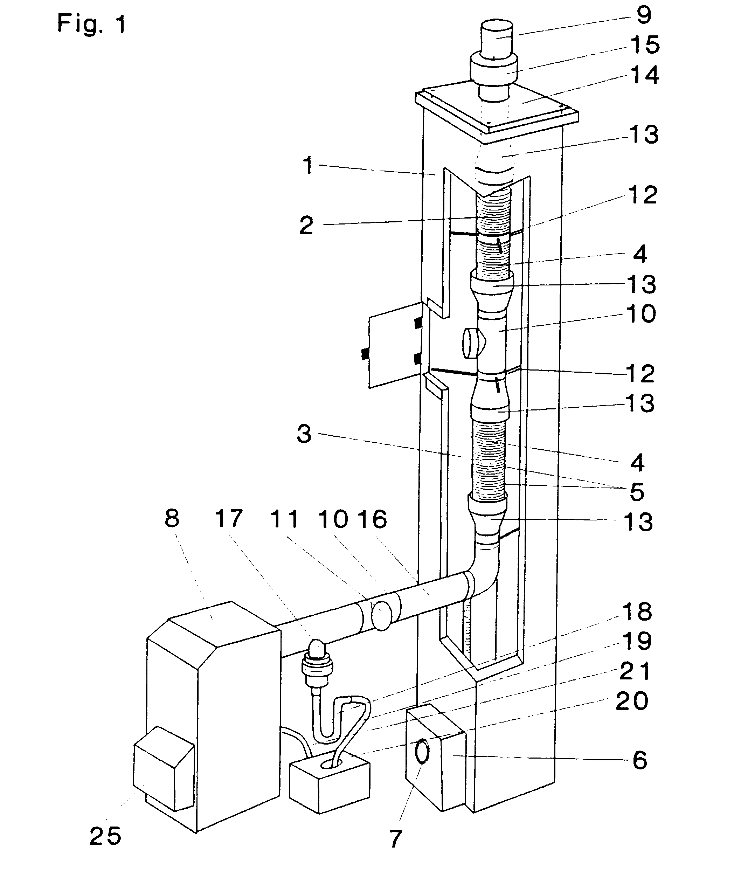

- Fig. 1: Dreidimensionale Darstellung einer Heizanlage mit einem nassen, kalten, kondensierenden Kamin
- Fig. 2a: Seitenansicht dreier verschiedener, für die Erhöhung der Kondensatmenge einsetzbarer Profilrohre
- Fig. 2b: Längsschnitt eines Rohres mit einem innenliegenden, spiralgerollten Bandprofil
- Fig. 3: Querschnitt des Rückschlagventiles vor dem Ventilator

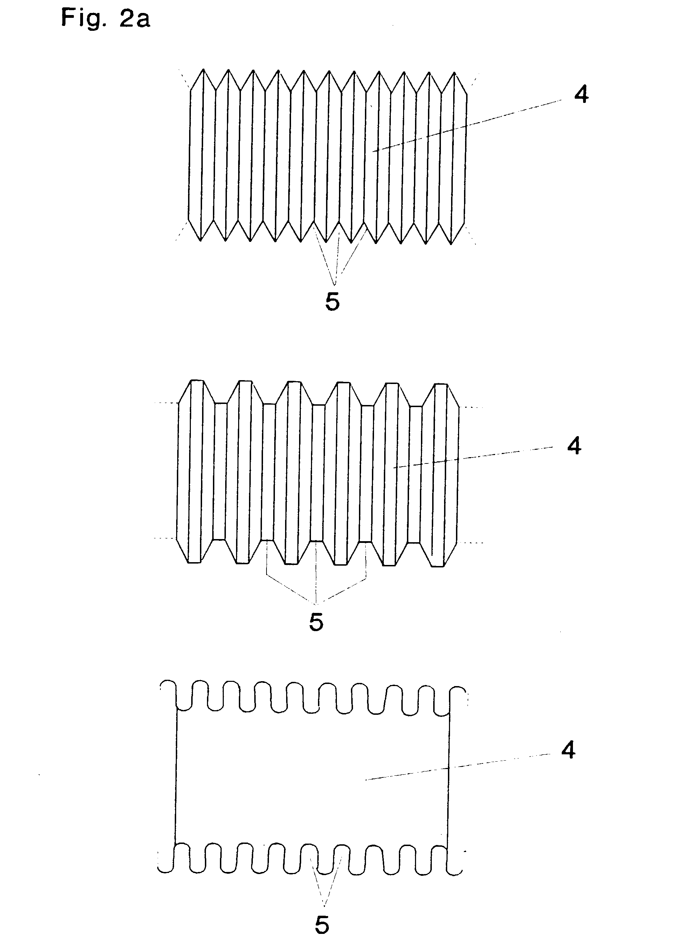

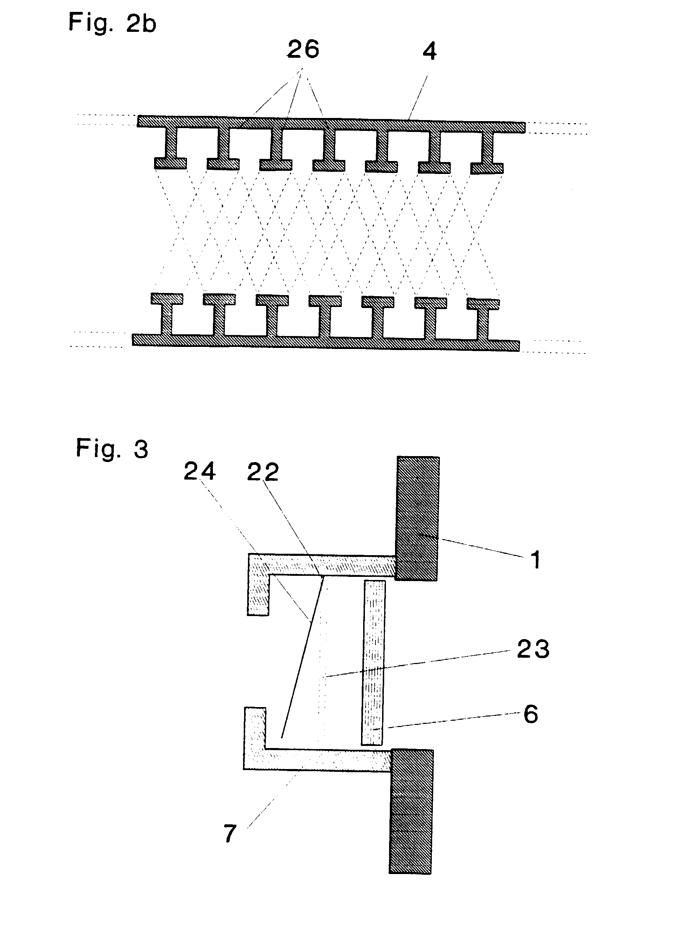

Der vorgeschlagene nasse, kalte, kondensierende Kamin verfügt in einer bevorzugten Ausbildungsart über eine gemauerte äussere Kaminwandung 1, in deren Innenraum ein Innenrohr 2 angeordnet ist. Die äussere Kaminwandung 1 kann dabei einen rechteckigen oder aber auch einen runden Querschnitt aufweisen. Sie kann Teil eines alten Kamins sein, welcher umgerüstet wurde, oder aus einwandigen Kaminbausteinen neu errichtet sein.
Bei der Renovation einer alten Heizung ist sehr oft im Innenraum der Kaminwandung 1 ein isoliertes Keramik-Innenrohr vorhanden. In diesem Fall wird das neue Innenrohr 2 in das alte Keramik-Innenrohr eingeführt.
Der Durchmesser dieses neuen Innenrohres 2 ist wesentlich kleiner als der Durchmesser bzw. die Breite der Kaminwandung 1 oder des alten Keramik-Innenrohrs, so dass zwischen der Aussenseite des neuen Innenrohres 2 und der Innenseite der Kaminwandung 1 bzw. des alten Keramik-Innenrohres ein Zwischenraum 3 verbleibt. Dieser Ringspalt 3 wird beim vorgeschlagenen Kamin nicht ausgefüllt. Geeignete Abstandhalter 12 sorgen dafür, dass das Innenrohr 2 möglichst koaxial zur Kaminwandung 1 verläuft.
Weder die Kaminwandung 1 noch das Innenrohr 2 sind wärmegedämmt. Das Innenrohr 2 wird einerseits durch die Hitze des Rauchgases, andererseits durch die bei der Kondensation des Rauchgases freiwerdende Kondensationswärme aufgewärmt. Es gibt diese Wärme an die Luft im Ringspalt 3 ab.
Je grösser der Anteil des Rauchgases ist, welcher im Kamin kondensiert, um so mehr Wärme und Schadstoffe können im Kamin zurückgehalten werden.
Die Erfahrung zeigt, dass sich Kondensat bevorzugt an Oberflächen bildet. Zusätzlich kann die Kondensatbildung durch Abkühlen dieser Oberflächen verstärkt werden. Aus dem Alltag ist bekannt, dass kalte Fensterscheiben schneller beschlagen als warme.
Durch Vergrösserung der Kontaktfläche zwischen dem Rauchgas und dem Innenrohr 2, und durch die schnelle Ableitung der vom Innenrohr 2 abgestrahlten Wärme wird folglich eine Verstärkung der Kondensation erreicht.
Die Kondensation kann zusätzlich durch Verwirbeln des Rauchgases gefördert werden.
Zur Vergrösserung der Kontaktfläche sind zwei Massnahmen vorgesehen:
Die erste Massnahme besteht darin, dass als Innenrohr 2 ein flexibles oder starres Profilrohr 4 aus Kunststoff verwendet wird. Vier mögliche Profilrohre 4 mit unterschiedlichem Profil sind in der Figur 2 abgebildet. Die Profilrillen 5 des in der Figur 2a zuoberst abgebildeten Profilrohres 4 haben einen dreieckigen Querschnitt, die Profilrillen 5 des in der Mitte abgebildeten Profilrohres 4 haben einen trapezförmigen Querschnitt und die Profilrillen 5 des zuunterst abgebildeten Profilrohres 4 haben einen U-förmigen Querschnitt. Die Figur 2b zeigt den Längsschnitt eines Profilrohres 4, welches sehr einfach extrudiert werden kann. Das Profilrohr 4 weist auf der Innenseite seiner sonst glatten Wand ein spiralgerolltes Bandprofil 26 mit T-förmigem Querschnitt auf. Für dieses Profilrohr 4 sind Durchmesser von 150 mm bis 1000 mm möglich. Es sind also auch Grossrohre realisierbar. Durch das spiralgerollte Bandprofil 26 wird die Innenfläche des Profilrohres 26 erheblich erhöht.
Als Werkstoff für die Profilrohre 4 wird vorzugsweise der äusserst widerstandsfähige Kunststoff Polyvinylidenfluorid (PVDF) gewählt. Der obere senkrechte Abschlussteil 9 des Innenrohres 2, die T-Stücke 10 mit Revisionsöffnungen 11 und der untere Abschlussteil 16 bestehen aus steifen, glatten Kunststoffrohren, da sich diese für komplizierter aufgebaute Rohrteile besser eignen als Profilrohre 4. Auch diese steifen, glatten Rohre bestehen vorzugsweise aus PVDF.
Der obere senkrechte Abschlussteil 9 ragt teilweise über den oberen Rand der äusseren Kaminwandung 1 hinaus. Eine Abdeckplatte 14 deckt die Öffnung oben an der äusseren Kaminwandung 1 ab. Zwischen der Abdeckplatte 14 und dem gemauerten Kaminstein hat es einen etwa 2 cm breiten Spalt, damit die Luft angesaugt werden kann. Die Abdeckplatte 14 weist in ihrem Zentrum ein kreisrundes Loch auf, durch welches der obere Abschlussteil 9 ragt. Über den herausragenden Bereich des Abschlussteiles 9 ist eine Abschlussmuffe 15 geschoben, welche den Eintritt von Wasser in den gemauerten Kamin verhindert.
Der untere Abschlussteil 16 des Innenrohres 2 weist einen senkrechten Bereich auf, welcher an das senkrechte Profilrohr 4 anschliesst. An den senkrechten Bereich grenzt ein vorzugsweise um etwa 90° gebogener Bereich an. Dieser Bereich führt in einen ungefähr waagerechten Bereich über, welcher bis zum Heizkessel 8 reicht.
Die Teile aus flexiblem oder starrem Profilrohr 4 werden entweder mit speziellen Schweissmaschinen an den steifen, glatten Kunststoffrohrteilen angeschweisst oder mit speziellen Verbindungsmuffen 13 an diesen befestigt.
Es ist zu beachten, dass die grosse Oberfläche des Profilrohres 4 nicht nur die Kondensation des Rauchgases, sondern auch die Wärmeabgabe des Profilrohres 4 an die Luft im Ringspalt 3 beschleunigt.
Im weiteren führen die Profilrillen 5 zu einer Verwirbelung des Rauchgases, was die Kondensation des Rauchgases noch zusätzlich verstärkt.
Als zweite Massnahme werden in das Innenrohr 2, vorzugsweise in einer Gitterkonstruktion ausgeführte, Füllkörper eingebaut (nicht gezeigt). An den Füllkörpern lagern sich kleinste Kondensattröpfchen an, die dann wie Kondensationskerne wirken, welche die weitere Kondensation des Rauchgases beschleunigen. Die Ableitung der vom Innenrohr 2 abgestrahlten Wärme wird beim vorgeschlagenen Kamin dadurch beschleunigt, dass die warme Luft im Ringspalt 3 durch einen Ventilator 6 aktiv abgesogen wird. Der Ventilator 6 ist am Fusse der Kaminwandung 1 angebracht. An der entsprechenden Stelle ist die Kaminwandung 1 mit einer runden Ansaugöffnung versehen, deren Durchmesser etwa dem Durchmesser des Ventilatorpropellers entspricht. Die Propellerachse verläuft rechtwinklig zur Kaminlängsachse. Die vom Ventilator 6 angesaugte Warmluft wird durch eine kurze Rohrleitung 7 direkt in den Heizraum geleitet. Von dort aus gelangt die warme Luft in den Brenner 25 des Heizkessels 8, wo sie als vorgewärmte Verbrennungsluft dem Brennstoff beigemischt wird. Der Heizraum, dessen Volumen normalerweise mindestens 10 Kubikmeter beträgt, hat die Funktion eines Puffers, welcher die Temperaturschwankungen der aus dem Ringspalt 3 abgesaugten Warmluft ausgleicht. Die Fenster des Heizraumes müssen geschlossen bleiben. Die Temperatur der abgesaugten Warmluft kann um 10 bis 15 °C schwanken. Eine direkte Zuführung der abgesaugten Warmluft in den Heizkessel 8 hätte eine durch die grossen Temperaturschwankungen verursachte, ungleichmässige Verbrennung zur Folge, welche sich ungünstig auf den Brennstoffverbrauch auswirken würde.
Dadurch, dass man den Heizraum als Puffer benützt, lässt sich die Bandbreite der Temperaturschwankungen auf etwa 3 °C reduzieren. Dank der damit erreichten regelmässigen Verbrennung und der Verwendung vorgewärmter Verbrennungsluft aus dem Heizraum kann sowohl eine gleichmässige, Brennstoff sparende Verbrennung erreicht als auch die Brennstoffzufuhr weiter reduziert werden, ohne dass die Betriebstemperatur des Heizkessels 8 sinkt.
Es wird ein Ventilator 6 mit einer Leistung von mindestens 16 Watt eingesetzt.
Wenn man den Heizkessel 8 und den Ventilator 6 abschaltet, dann kann es im Ringspalt 3 zwischen dem Innenrohr 2 und der äusseren Kaminwandung 1 zu einer Umkehr des Zuges kommen. Das bedeutet, dass relativ warme Luft aus dem Heizungsraum durch die kurze Rohrleitung 7 in den Ringspalt 3 strömt, was zu einem Wärmeverlust im Haus führt.
Beim vorgeschlagenen Kamin wird die Zugumkehr mit einem Rückschlagventil 22, welches in der kurzen Rohrleitung 7 vor dem Ventilator 6 angeordnet ist, verhindert. Das Rückschlagventil 22 besteht vorzugsweise aus einem runden Gitter 23 und einer runden Membran 24 (vgl. Fig. 3). Das runde, starr befestigte Gitter 23 verläuft quer zur kurzen Rohrleitung 7. Es bedeckt den gesamten Querschnitt der kurzen Rohrleitung 7. Die Membran 24 ist gleich gross wie das Gitter 23 oder geringfügig kleiner. Sie ist unmittelbar vor dem Gitter 23, d.h. auf der dem Heizkessel 8 zugewandten Gitterseite, angeordnet. Sie ist mit einem kurzen, zuoberst liegenden Abschnitt ihres Randes am Gitter 23 oder an der Innenwand der kurzen Rohrleitung 7 fixiert, so dass sie nach vorne vom Gitter 23 weggeschwenkt werden kann.
Wenn der Heizkessel 8 und der Ventilator 6 in Betrieb sind, dann hebt der Luftstrom, welcher vom Ringspalt 3 durch die kurze Rohrleitung 7 in den Heizraum fliesst, die Membran 24 vom Gitter 23 ab. Das Rückschlagventil 22 ist in diesem Zustand geöffnet.
Wenn es nach dem Abschalten des Heizkessels 8 und des Ventilators 6 zu einer Zugumkehr kommt, dann wird die Membran 24 durch die relativ warme Luft, welche vom Heizkessel 8 in die Richtung des Ringspaltes 3 fliesst, an das Gitter 23 gedrückt. Das Rückschlagventil 22 ist in diesem Zustand geschlossen. Der Zug (Sog) nach oben im Ringspalt 3, den die warme Luft erzeugt, schliesst also das Rückschlagventil 22. Ein Eindringen der relativ warmen Luft aus dem Heizungsraum in den Ringspalt 3 wird so verhindert, und das Abfliessen der warmen Luft aus dem Ringspalt 3 nach oben ins Freie wird verzögert.
Das im Innenrohr 2 entstehende Kondensat rinnt wie bei den bekannten nassen, kalten, kondensierenden Kaminen entlang der Innenrohrinnenwand nach unten. Im horizontalen Bereich des unteren Abschlussteiles 16 weist das Innenrohr 2 eine nach unten zeigende Ablauföffnung 17 für das Kondensat auf. Das Kondensat gelangt durch einen Siphon 18 und einen Schlauch 19 aus Polyethylen PE in einen Neutralisationsbehälter 20. Solche Neutralisationsbehälter 20 enthalten üblicherweise einen Aktivkohlefilter und Neutralisationsgranulat. Als Neutralisationsmittel wird beim vorgeschlagenen Kamin aber nicht mehr wie bisher üblich reines, chemisch hergestelltes Kalziumkarbonat, sondern umweltschonenderer Marmor, z.B. in Form von Split, ganzen Marmor-Stücken oder Marmor-Mehl, verwendet.
Anstelle des Siphons 18 kann eine Ionentauscher-Harz-Patrone verwendet werden, welche eventuell im Kondensat enthaltene, aus dem Heizkessel 8 stammende Schwermetalle bindet.
Das Wasser, welches nach der Reinigung und Neutralisierung den Neutralisationsbehälter 20 verlässt, kann bedenkenlos über einen Schlauch 21 in die Kanalisation geleitet werden.
Die Kondensatmenge kann gegenüber den bekannten Kaminen, welche kondensierend betrieben werden, verdoppelt werden. Die erhöhte Kondensatmenge bedeutet eine grössere Reduktion des Schadstoffausstosses und eine verbesserte Rückgewinnung der latenten Kondensationswärme. Die Verwendung von Marmor als Neutralisationsmittel stellt ein weiterer Beitrag zum Umweltschutz dar.
Da sich das Gasvolumen im Innenrohr 2 wegen der Kondensation gegen oben ständig verringert, entsteht ein Sog, welcher für die notwendige Zugstärke im Innenrohr 2 sorgt. Trotz der reduzierten Abgastemperatur gelingt es dadurch, die verbleibenden Abgasteile problemlos aus dem Kamin hinauszuleiten. Das verringerte-Gasvolumen erlaubt sogar eine Reduktion des Innenrohrquerschnittes.
Die verwendeten Profilrohre 4 haben nicht nur den Vorteil, dass ihre Wand eine grössere Oberfläche aufweisen als glatte Rohre; sie können ausserdem flexibel sein. Alte Kaminwandungen verlaufen oft nicht gerade. Ein Grund dafür können Gebäuderenovationen sein, bei denen ein bestehendes Gebäude um ein Stockwerk erweitert wurde. Oft wurde die Kaminwandung beim Übergang zum neuen Stockwerk schräg ins neue Stockwerk geführt. Ein weiterer Grund können Verschiebungen der Kaminwand sein. Die flexiblen Profilrohre 4 haben nun den Vorteil, dass sie sich im Gegensatz zu den starren Rohren dem Verlauf des Kamins anpassen. Für die Montage kann ein solches flexibles Profilrohr 4 einfach von oben oder von unten in den Innenraum der bestehenden Kaminwandung hineingeschoben werden. Werden glatte, steife Rohre verwendet, muss die Kaminwandung für die Montage des Innenrohres an den schräg verlaufenden Stellen aufgespitzt werden.

## Patentansprüche

1. Kondensationskamin der naß-kalt-kondensierenden Bauart für ein Heizungssystem, das einen Heizraum und einen darin angeordneten Brenner (25) eines Heizkessels umfaßt, mit einem in den Kamin eingesetzten, rauchgasführenden Innenrohr (2) und einer äußeren Kaminwandung (1), wobei zwischen der äußeren Kaminwandung (1) und dem Innenrohr (2) ein Ringspalt (3) zur Zuführung und zum Aufwärmen von Frischluft vorgesehen ist, an den ein Ventilator (6) angeschlossen ist, **dadurch gekennzeichnet**, daß an den Ringspalt (3) und den Ventilator (6) eine kurze Rohrleitung (7) mit Rückschlagventil (22) zur Warm luftzuführung in den Heizraum und zu dem darin angeordneten Brenner (25) des Heizkessels angeschlossen ist, wobei der Ventilator am Fuße der Kaminwandung angebracht ist.

2. Kondensationskamin nach Anspruch 1, dadurch gekennzeichnet, daß das Innenrohr (2) aus Kunststoff besteht und flexibel ist.

3. Kondensationskamin nach Anspruch 1 oder 2, dadurch gekennzeichnet, daß das Innenrohr (2) ein Profilrohr (4) mit kontaktflächenvergrößernden Rillen (5) ist.

4. Kondensationskamin nach Anspruch 1 oder 2, dadurch gekennzeichnet, daß das Innenrohr (2) ein wendelförmig gerolltes Bandprofil (26) enthält.

5. Kondensationskamin nach einem der Ansprüche 1 bis 4, dadurch gekennzeichnet, daß an dem Innenrohr (2) eine Kondensatablauföffnung (17) angeordnet ist, an die ein Siphon (18) und/oder ein Ionenaustauscher angeschlossen ist.

6. Kondensationskamin nach einem der Ansprüche 1 bis 5, dadurch gekennzeichnet, daß im Innenrohr (2) und/oder im Ringspalt (3) kontaktflächenvergrößernde Füllkörper vorgesehen sind.

7. Kondensationskamin nach einem der Ansprüche 1 bis 6, dadurch gekennzeichnet, daß am Innenrohr (2) zu dessen koaxialen Ausrichtung zur Kaminwandung (1) Abstandshalter (12) vorgesehen sind.

8. Kondensationskamin nach einem der Ansprüche 1 bis 7, dadurch gekennzeichnet, daß das Rückschlagventil (22) in der Rohrleitung (7) vorgesehen ist.

9. Kondensationskamin nach einem der Ansprüche 1 bis 8, dadurch gekennzeichnet, daß für das ablaufende Kondensat eine Neutralisationsvorrichtung (20) vorgesehen ist.

10. Kondensationskamin nach Anspruch 9, dadurch gekennzeichnet, daß die Neutralisationsvorrichtung (20) einen Aktivkohlefilter und/oder ein Neutralisationsgranulat aufweist.

11. Kondensationskamin nach Anspruch 10, dadurch gekennzeichnet, daß zur Neutralisation des Kondensats Marmor vorgesehen ist.

12. Kondensationskamin nach Anspruch 11, dadurch gekennzeichnet, daß der zur Neutralisation des Kondensats vorgesehene Marmor in Form von Split, Stücken oder/und Mehl beschaffen ist.

13. Kondensationskamin nach einem der Ansprüche 1 bis 12, dadurch gekennzeichnet, daß das Innenrohr (2) aus mehreren, mittels Verbindungsmuffen (13) verbundenen Innenrohr-Teilabschnitten besteht.

14. Kondensationskamin nach einem der Ansprüche 1 bis 13, dadurch gekennzeichnet, daß das Innenrohr (2) aus Polyvinylidenfluorid (PVDF) besteht.

15. Kondensationskamin nach einem der Ansprüche 1 bis 14, dadurch gekennzeichnet, daß der Heizraum als Wärmepuffer für die zu dem Brenner (25) zurückgeführte Warmluft ausgebildet ist.

16. Kondensationskamin nach Anspruch 15, dadurch gekennzeichnet, daß der Heizraum weitgehend geschlossen ausgebildet ist.

## Claims

1. Condensation flue of the wet-cold condensing type for a heating system, which comprises a boiler room and a heating boiler burner (25) arranged therein, with an internal pipe (2) for the flue gases inserted in the flue and an external flue wall (1), whereby an annular gap (3) is provided between the outer flue wall (1) and the internal pipe (2) for the supply and heating of fresh air, to which gap a fan (6) is connected, characterized in that a short length of pipe (7) with a check valve (22) for the supply of hot air into the boiler room and to the burner (25) of the heating boiler arranged therein is connected to the annular gap (3) and the fan (6), whereby the fan is installed at the foot of the flue wall.

2. A condensation flue as claimed in Patent Claim 1, characterized in that the internal pipe (2) is made of plastic and is flexible.

3. A condensation flue as claimed in Patent Claims 1 or 2, characterized in that the internal pipe (2) is a profile pipe (4) with grooves (5) to increase its contact surface.

4. A condensation flue as claimed in Patent Claims 1 or 2, characterized in that the internal pipe (2) contains a helically rolled strip profile (26).

5. A condensation flue as claimed in one of the Patent Claims 1 to 4, characterized in that arranged on the internal pipe (2) is a condensate drain orifice (17), to which a siphon trap (18) and/or an ion exchanger is/are connected.

6. A condensation flue as claimed in one of the Patent Claims 1 to 5, characterized in that packed columns intended to increase the contact surface are provided in the internal pipe (2) and/or the annular gap (3).

7. A condensation flue as claimed in one of the Patent Claims 1 to 6, characterized in that distance pieces (12) are provided on the internal pipe (2) to ensure its coaxial alignment with the flue wall (1).

8. A condensation flue as claimed in one of the Patent Claims 1 to 7, characterized in that the check valve (22) is provided in the length of pipe (7).

9. A condensation flue as claimed in one of the Patent Claims 1 to 8, characterized in that a neutralization means (20) is provided for the condensate as it is drained.

10. A condensation flue as claimed in Patent Claim 9, characterized in that the neutralization means (20) exhibits an active carbon filter and/or a neutralization granulate.

11. A condensation flue as claimed in Patent Claim 10, characterized in that marble is provided for the neutralization of the condensate.

12. A condensation flue as claimed in Patent Claim 11, characterized in that the marble provided for the neutralization of the condensate is present in the form of chippings, pieces and/or grit.

13. A condensation flue as claimed in one of the Patent Claims 1 to 12, characterized in that the internal pipe (2) consists of a number of sections of internal pipe connected by means of coupling sleeves (13).

14. A condensation flue as claimed in one of the Patent Claims 1 to 13, characterized in that the internal pipe (2) consists of polyvinylidene fluoride (PVDF).

15. A condensation flue as claimed in one of the Patent Claims 1 to 14, characterized in that the boiler room is executed as a heat buffer for the hot air returned to the burner (25).

16. A condensation flue as claimed in Patent Claim 15, characterized in that the boiler room is executed so that it is an essentially closed area.

## Revendications

1. Cheminée de condensation se basant sur la technique de la construction froide, humide et condensante pour un système de chauffage comportant une chambre de chauffage avec un brûleur (25) de chaudière, avec une conduite (2) insérée dans une cheminée laissant passer la fumée et un mur de cheminée extérieur (1), avec un espace en forme d'anneau (3) entre le mur de cheminée extérieur (1) et la conduite de cheminée intérieure (2) permettant l'apport et le réchauffement d'air frais, avec la connexion d'un ventilateur (6), caractérisé par le fait qu'une courte conduite tubulaire (7) avec une soupape de retenue (22) est placée entre l'espace en forme d'anneau (3) et le ventilateur (6) permettant l'apport d'air frais dans la chambre de chauffage et le brûleur (25) de la chaudière, le ventilateur étant placé au pied du mur de la cheminée.

2. Cheminée de condensation selon la revendication 1, caractérisée par le fait que la conduite intérieure (2) est en matière synthétique et flexible.

3. Cheminée de condensation selon la revendication 1 ou 2, caractérisée par le fait que la conduite intérieure (2) est une conduite profilée (4) avec des rainures agrandissant les surfaces de contact (5).

4. Cheminée de condensation selon la revendication 1 ou 2, caractérisée par le fait que la conduite intérieure (2) contient une bande profilée roulée hélicoïdalement (26).

5. Cheminée de condensation selon les revendications 1 à 4, caractérisée par le fait qu'une ouverture permettant l'écoulement de la condensation (17) est placée sur la conduite intérieure (2) qui est connectée à un siphon (18) ou à un échangeur de ions.

6. Cheminée de condensation selon les revendications 1 à 5, caractérisée par le fait que des corps de remplissage agrandissant les surfaces de contact sont prévus pour la conduite intérieure (2) et/ou l'espace en forme d'anneau (3).

7. Cheminée de condensation selon les revendications 1 à 6, caractérisée par le fait que des entretoises de distance (12) sont prévues pour l'orientation coaxiale de la conduite intérieure (2) aux murs de la cheminée.

8. Cheminée de condensation selon les revendications 1 à 7, caractérisée par le fait que la soupape de retenue (22) est prévue dans la conduite tubulaire (7).

9. Cheminée de condensation selon les revendications 1 à 9, caractérisée par le fait qu'un système de neutralisation (20) est prévu pour recueillir la condensation qui s'écoule.

10. Cheminée de condensation selon la revendication 9, caractérisée par le fait que le système de neutralisation (20) comporte un filtre de charbon actif et/ou un granulat de neutralisation.

11. Cheminée de condensation selon la revendication 10, caractérisée par le fait que du marbre est prévu pour la neutralisation de la condensation.

12. Cheminée de condensation selon la revendication 11, caractérisée par le fait que le marbre prévu pour neutraliser la condensation est en forme de morceaux, gravillon et/ou farine.

13. Cheminée de condensation selon les revendications 1 à 12, caractérisée par le fait que la conduite intérieure (2) comporte plusieurs parties de conduite reliées entres elles par des manchons de liaison (13).

14. Cheminée de condensation selon les revendications 1 à 13, caractérisée par le fait que la conduite intérieure (2) est fait de Polyvinylidenfluorid (PVDF).

15. Cheminée de condensation selon les revendications 1 à 14, caractérisée par le fait que la chambre de chauffage joue le rôle de tampon de chaleur pour l'air chaud reconduite au brûleur (25).

16. Cheminée de condensation selon la revendication 15, caractérisée par le fait que la chambre de chauffage est développée de manière fermée.
